(19) Europäisches Patentamt
European Patent Office
Office européen des brevets

(11) Publication number: **0 157 210**
**A1**

(12) **EUROPEAN PATENT APPLICATION**

(21) Application number: 85102540.3

(22) Date of filing: 06.03.85

(51) Int. Cl.⁴: C 08 L 95/00, C 08 K 5/51

(30) Priority: 09.03.84 JP 45162/84

(43) Date of publication of application: 09.10.85 Bulletin 85/41

(84) Designated Contracting States: AT DE FR GB

(71) Applicant: Kao Corporation, 14-10, Nihonbashi Kayabacho 1 chome, Chuo-Ku Tokyo 103 (JP)

(72) Inventor: Yamaguchi, Shinichiro, 113o, Nishihama, Wakayama-shi Wakayama (JP)
Inventor: Tamaki, Ryoichi, 63-6, Kinomoto, Wakayama-shi Wakayama (JP)

(74) Representative: Dr. E. Wiegand Dipl.-Ing. W. Niemann Dr. M. Kohler Dipl.-Ing. J. Glaeser Dr. H.-R. Kressin Patentanwälte, Herzog-Wilhelm-Strasse 16, D-8000 München 2 (DE)

(54) **Additive for heated bitumen.**

(57) Bitumen is improved in adhesion to aggregates by adding to the bitumen, when heated, an acidic organophosphorus compound having a P–OH group and a group of the formula (I):

A-(-RO-)n- (I)

in which A is an organic group having 8 to 80 carbon atoms, R is an alkylene group having 1 to 10 carbon atoms and n is zero or an integer of 1 to 10.

The present invention relates to an additive for heated bitumen, which is composed of a specified acidic organophosphorus compound, and more particularly to an additive for heated bitumen, which strengthens the adhesion between the bitumen and aggregates and consequently can impart very excellent peeling resistance to the bitumen.

Bitumen such as asphalt, tar and pitch obtained from petroleum or coal is used as paving materials, roofing materials and waterproofing materials, and particularly is in great demand as the paving materials. Since, however, the bitumen is non-polar, it has inherent disadvantages that the adhesion between the bitumen and aggregate is poor and hence the bitumen is peeled off from the aggregate by the action of water such as rain water or subterranean water.

As the size and the weight of vehicles are increased, rutting or fluidization takes place on asphalt pavements to damage the smoothness of traffic and comfortableness of traveling. As a countermeasure, it is proposed that a thermoplastic resin or rubber is incorporated in bitumen to increase the consistency

of asphalt, thus freeing the pavement from the aforementioned problem. However, rutting is also caused by the peeling of the aggregate from the bitumen and the movement of the peeled aggregate on a roadbed, and an effect of improving the interfacial properties between the aggregate and the bitumen and improving the peeling resistance, particularly in the presence of water to prevent the aggregate from being peeled off from the bitumen and the peeled aggregate from moving, can not be obtained by the incorporation of the thermoplastic resin or rubber.

Accordingly, improving the adherability of the bitumen to the aggregate is a very important technical problem for an improvement in the performance of asphalt pavements, and various methods have been proposed. For example, Japanese Patent Publication No. 38993/1980 discloses the use of higher aliphatic polyamines and derivatives thereof. Though the initial adhesion can be enhanced by the conventionally proposed higher aliphatic polyamines and derivatives thereof, it is believed that the effect of preventing the peeling persists at most about one year.

Japanese Patent Laid-Open No. 51745/1982 discloses a method of improving the adhesion performance by adding silane compounds. However, in this method,

harmful odor and vapor are emitted during the addition of heated molten bitumen and the production of heated composite material so that problems on safety and hygiene are caused and it is economically of no practical use.

Japanese Patent Publication No. 23691/1979 discloses a composition obtained by mixing asphaltene with a phosphorus compound such as phosphorus pentoxide, polyphosphoric acid or phosphorus pentasulfide as an additive for modifying asphalt. Since, however, these phosphorus compounds are inorganic substances, they are not always satisfactorily dispersed in organic substances and the adhesion of the asphalt to the aggregate is insufficient. Since, in recent years, there is an increasing fear of loweing in the quality of asphalt or aggregate and asphalt of a lowered quality is used in the reclaiming technique using waste paving materials, firm adhesion can not be expected and therefore the modification of asphalt is earnestly desired. However, no method for solving the aforementioned problems and meeting various requirements about the performances has been developed as yet.

We have made studies of obtaining a bitumen composition which well adheres to all types of aggregates ranging from siliceous acidic aggregate to calcareous

basic aggregate and has temperature sensitivity and durability as well as peeling resistance by using a non-polar bituminous substance such as paraffin asphalt. As a result, we have found that acidic organophosphorus compounds having certain specific groups are capable of imparting remarkable peeling resistance to the bitumen. The present invention is based on this finding.

The invention provides a method for strengthening the adhesion between heated bitumen and aggregates by adding to the bitumen an acidic organophosphorus compound having a P-OH group and a group of the formula (I):

$$A-(-RO-)n- \qquad (I)$$

in which A is an organic group having 8 to 80 carbon atoms, R is an alkylene group having 1 to 10 carbon atoms and n is zero or an integer of 1 to 10.

The compound preferably has the formula (II):

$$[BO(C_2H_4O)_n]_m \overset{O}{\overset{\|}{P}} - (OH)_k \qquad (II)$$

in which B is a saturated or unsaturated aliphatic hydrocarbon group having 8 to 36 carbon atoms or an alkylphenyl group having 8 to 26 carbon atoms, m is 1 or 2, n is zero or an integer of 1 to 10 and k is 1 or 2, the total of m and k being 3.

The invention also Provides a bitumen composition which comprises bitumen, preferably heated bitumen and an additive of an acidic organophosphorus compound as defined above.

An object of the present invention is to provide an additive for heated bitumen, which is composed of an acidic organophosphorus compound having a P-OH group and a group or groups of the following formula (I) in the molecule:

$$A -\!\!\left( RO \right)_{n} \qquad \ldots.(I)$$

wherein A is an organic group having 8 to 80 carbon atoms, R is an alkylene groups having 1 to 10 carbon atoms and n is an integer of 0 to 10.

The requisite of the present invention resides in the use of an additive for bitumen, which has a P-OH group and an organic group having 8 to 80 carbon atoms, and it will suffice when this requisite is satisfied. The additive of the present invention may be an acidic organophosphorus compound alone, an integrated combination of two or more of them,

or a mixture of different acidic organophosphorus compounds. The conventionally proposed higher aliphatic polyamines and derivatives thereof are adsorbed and oriented according to the polarity of the polar group, whereby wetting between the bitumen and the aggregate is improved. They are effective in improving the initial adhesion, but have a problem in the long-term adhesion. For example, when the temperature is elevated and an external stress such as dynamic load is applied in the presence of water over a long period of time, the additive acts as an emulsifier for the bitumen, because the additive itself is a surfactant, and as a result, the bitumen is peeled off from the aggregate.

On the other hand, the additive of the present invention is characterized in that the interface between the bitumen and the aggregate is modified to chemically bond them strongly to each other so that, even when water penetrates into the surface of the aggregate, the water can not replace the bitumen, and the bonding interface of the bitumen is not broken even when an impact is given thereto.

The organic group A of the acidic organophosphorus compound used in the present invention may be derived from natural products such as fats and oils or synthetic

products obtained by the cracking of paraffin or the low polymerization of ethylene, so long as it has 8 to 80 carbon atoms. It may have various substituents as far as the total number of carbon atoms is in the range of 8 to 80. When the substituents contain an active hydrogen group such as N-H, O-H or S-H, the number of active hydrogen atoms must be at most one per five carbon atoms of the substituent. Preferred examples of the organic group include aliphatic hydrocarbon groups having 8 to 36 carbon atoms and alkylphenyl groups having 8 to 26 carbon atoms, and these groups may be saturated or unsaturated and may be straight-chain or branched.

Examples of such aliphatic hydrocarbon groups include octyl, nonyl, decyl, undecyl, dodecyl, tridecyl, tetradecyl, pentadecyl, hexadecyl, heptadecyl, octadecyl, nonadecyl, eicosyl, heneicosyl, docosyl, tricosyl, tetracosyl, triacontyl, pentatriacontyl and hexatriacontyl. Examples of the alkylphenyl group include ethylphenyl, propylphenyl, butylphenyl, pentylphenyl, hexylphenyl, heptylphenyl, octylphenyl, nonylphenyl, decylphenyl, undecylphenyl, dodecylphenyl, tridecylphenyl, tetradecylphenyl, pentadecylphenyl, hexadecylpnenyl, heptadecylphenyl, octadecylphenyl, nonadecylphenyl and eicosylphenyl.

The organic group is bonded directly or through an oxyalkylene linkage to other atomic groups to form the acidic organophosphorus compound. Examples of the alkylene group of such an oxyalkylene group include ethylene, propylene, butylene, pentylene, hexylene, heptylene, octylene, nonylene and decylene, among which ethylene and propylene are particularly preferred.

The additive for bitumen, which is used in the present invention must have a P-OH group in the molecule and the chemical structure thereof can be represented, for example, by the following formulas:

$$(X)_m \overset{O}{\overset{\|}{P}} (Y)_k \quad , \quad (X)_m \overset{O}{\overset{\|}{P}} (OH)_k$$

wherein X is $A(RO)_n$ , Y is OH or H, m and k are each an integer of 1 or 2 and m+k is 3, and A, R and n are as defined in formula (I).

Alternatively, the additive may be polymers which are formed through P-O-P linkages by condensing the aforementioned compound with each other. Among them, acidic organophosphorus compounds having the following formula (II) are preferred:

$$\left[BO\ (C_2H_4O)_n\right]_m \overset{O}{\overset{\|}{P}} (OH)_k \qquad \ldots (II)$$

wherein B is a saturated or unsaturated aliphatic

hydrocarbon group having 8 to 36 carbon atoms or an alkylphenyl group having 8 to 26 carbon atoms, m is an integer of 1 or 2, n is an integer of 0 to 10, k is an integer of 1 or 2 and m+k is 3.

When the acidic organophosphorus compound of the present invention has the structure >P-OH, the compounds can exist in a tautomeric form as follows:

$$>P\text{-}OH \rightleftharpoons >\overset{O}{\overset{\|}{P}}\text{-}H$$

All such tautomic forms of the compounds having the structure >P-OH as well as the structure $>\overset{O}{\overset{\|}{P}}\text{-}H$ are included within the scope of the present invention.

The additive of the present invention is used in a quantity of 0.1 to 5.0 % by weight, preferably 0.3 to 1.0 % by weight based on that of bitumen or modified bitumen. The addition of such a small quantity thereof imparts the adhesion between the bitumen and the aggregate and peeling resistance which are superior to those imparted by conventional additives. The reason why the excellent peeling resistance can be obtained by the acidic organophosphorus compound of the present invention is thought to be that since the surface of the aggregate in a wetted state has -OH groups, hydrogen bonds are formed between the surface and the compound of the present invention

and, when further heated, they undergo dehydration, whereby the compound is chemically bound to the atoms on the surface of the aggregate and the compound itself is polymerized to thereby form a tough hydrophobic film.

In acidic organophosphorus compounds of the present invention can be industrially easily prepared by conventional methods. For example, the compounds of formula (II) can be prepared by the reaction of phosphoric anhydride ($P_2O_5$), phosphoryl trichloride ($POCl_3$) or phosphorus trichloride ($PCl_3$) with a hydroxyl compound of the formula $BO(C_2H_4O)_nH$. When phosphoric anhydride is used as the starting material, a mixture of a monoester and a diester is likely to be formed as shown by the following formula:

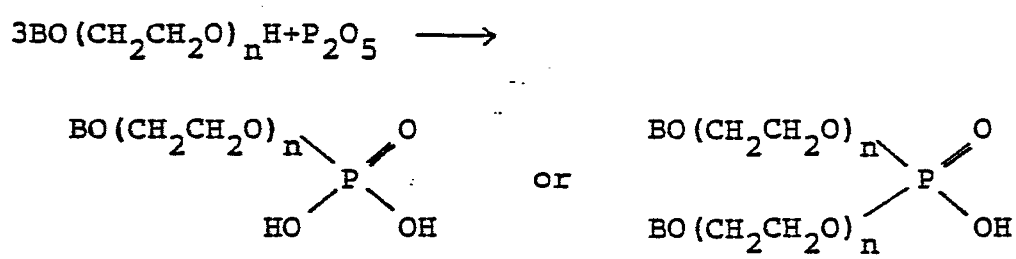

or

Even when any of the monoester, the diester and the mixture thereof is used, the effect of improving the bitumen is substantially equal, and they are excellent in the thermal stability required of the additive and do not cause any problems on safety against

living organisms.

Typical examples of the hydroxyl compounds which can be used for the preparation of the compounds of formula (II) are aliphatic alcohols such as 2-ethylhexyl alcohol, decyl alcohol, lauryl alcohol, myristyl alcohol, palmityl alcohol, stearyl alcohol, isostearyl alcohol, oleyl alcohol and arachidyl alcohol; alkylphenols such as octylphenol and nonylphenol; synthetic alcohols prepared by the oxo process, Ziegler process and Guerbet process; alcohols prepared by adding 1 to 10 mol of an alkylene oxide, preferably ethylene oxide, to these alcohols; and higher alcohols composed of mixtures thereof. Alcohols having more carbon atoms will give the better results and those having 16 or more carbon atoms are preferred.

The starting materials for use in the production of the acidic organophosphorus compounds of the present invention include not only the above hydroxyl compounds but also castor oil, tall oil and compounds having active hydrogen such as amines, amides and mercaptans. The compounds having active hydrogen are chosen from among those having at most one active hydrogen atom (e.g. N-N, O-H, or S-H) per five carbon atoms.

Preferably, aliphatic amines are used together

with the acidic organophosphorus compound of the present invention to well attain the purpose of the present invention. The amines are effective in that they have a nitrogen atom in its molecule, thus promoting the initial wetting. Though there are no limitations with regard to the type of the amines, higher aliphatic polyamines such as beef tallow propylenediamine and derivatives thereof, alkylhydroxyamines and alkylolamines such as monoethanolamine, diethanolamine and triethanolamine are generally used. It is preferred to use them on a neutral or acidic side.

Examples of the bitumen to which the acidic organophosphorus compound of the present invention is added include petroleum straight asphalt, semi-blown asphalt, cutback asphalt, natural asphalt, petroleum tar, pitch and asphalt prepared by incorporating a softener in bitumen formed from a solvent de-asphalting process so as to meet requirements according to the standard of paving asphalt.

The additive of the present invention can be applied to modified bitumen obtained by adding a modifier such as a thermoplastic resin, natural rubber, a synthetic rubber such as a styrene/butadiene copolymer or a chloroprene copolymer, and a homopolymer or a copolymer of ethylene, vinyl acetate, an acrylate,

a methacrylate or styrene to bitumen.

It is believed that when a large quantity of a rubbery substance is added, the adhesion of the modified bitumen tends to be lowered. However, when the rubber is used together with the acidic organophosphorus compound of the present invention, adhesion can be remarkably enhanced and the point at issue is solved.

An ethylene/vinyl acetate copolymer and an ethylene/ethyl acrylate are particularly preferred as the modifier.

The modifier is used in a quantity of preferably 1 to 20 parts by weight, particularly 2 to 15 parts by weight per 50 to 95 parts by weight of the bitumen.

In addition to the thermoplastic resins and the rubbery substances, an inorganic filler such as calcium carbonate, slaked lime, Portland cement or activated carbon, an organic filler, a petroleum softener such as petroleum resin or low-molecular polyethylene, a vegetable oil softener such as oleic acid, various plasticizers and sulfur may be used together with the acidic organophosphorus compound of the present invention.

The modified bitumen obtained by properly selecting a suitable modifier from among those listed above and adding it to bitumen is excellent in temperature

sensitivity and durability. By further adding the acidic organophosphorus compound thereto, adherability and peeling resistance are improved, whereby there can be obtained a bitumen composition having various performance required by markets.

Accordingly, the bitumen composition can be also used as waterproof cover such as plant floor, roofing material and underground protective material for vehicle in addition to the paving material for roads.

The mixing of the acidic organophosphorus compound of the present invention with the bitumen can be carried out by adding it to a molten asphalt heated at 100 to 250°C with stirring. When the modified bitumen is used, the modifier and the acidic organophosphorus compound may be simultaneously added to the molten bitumen heated at 100 to 250°C. Alternatively, the modified bitumen is previously prepared and the acidic organophosphorus compound is then added thereto.

The following examples will further illustrate the present invention.

In order to confirm the effect of the present invention, a test based on the peeling test of an asphalt film as stipulated in the Guideline for Asphalt Paving (published by the Japan Road Association) and the Reidel and Weber Test proposed by the British

Road Institute were carried out.

The Riedel and Weber Test is one of the severest test methods among various peeling test methods and the test results thereof fairly well correspond to practical road test results.

The Riedel and Weber Test is carried out in the following manner:

43 parts by weight of macadem having a particle size of 0.15 to 0.074 mm and 43 parts by weight of macadam having a particle size of 0.3 to 0.15 mm are mixed together and heated to 170°C. 14 parts by weight of molten asphalt or modified asphalt heated at 150°C is added thereto and thorough mixing is carried out to completely coat the macadam with the asphalt or the modified asphalt. 0.5 g of the resulting asphalt mixture is put in a beaker containing 25 mℓ of a solution of sodium carbonate having a concentration as shown in the Table below and the solution is boiled for one min. The concentration of the solution in which complete peeling between the macadem and the asphalt is first observed even in a small quantity is recorded to determine an adhesion score.

The relationship between the sodium carbonate concentration and the adhesion score is as follows:

| Concentration of sodium carbonate (molar concentration) | 0 | 1/256 | 1/128 | 1/64 | 1/32 | 1/16 | 1/8 | 1/4 | 1/2 | 1 |
|---|---|---|---|---|---|---|---|---|---|---|
| Adhesion score | 0 | 1 | 2 | 3 | 4 | 5 | 6 | 7 | 8 | 9 |

A score of 10 is assigned to a sample when it is not peeled off in a solution containing sodium carbonate at a concentration of one mol.

Example 1

100 g of each of macadems having a particle size through a 13-mm sieve, but not through a 5-mm sieve from Takarazuka (quartz porphyry) and from Kuzuu (limestone) was weighed, thoroughly washed, put in a 300 mℓ metallic container and dried. Each of them was then placed in a constant-temperature bath previously kept at 150°C and heated for one hr. Separately, asphalt (penetration of 80 to 100) containing a given quantity of an additive was placed in a constant-temperature bath kept at 180°C and heated for a given period of time, and 5.5 g thereof was added to the above macadam. The mixture was thoroughly stirred with a spatula for a few min so as to completely coat the surface of the macadam with the asphalt. The asphalt-coated macadam was spread over a glass plate,

left to stand for one hr and cooled to room temperature to cure the asphalt.

The resulting aggregate was immersed in hot water in a constant-temperature water tank kept at 80°C for 30 min. After 30 min, the coated aggregate in water was observed from the upper part and the % area of the asphalt film peeled from the aggregate was evaluated with the naked eye. The % peeled area is expressed as peeling rate. The results are shown in Table 1.

Table 1

| | Additive | Quantity of addition (%) | Peeled area (%) after heating (180°C) for a given period of time | | | |
|---|---|---|---|---|---|---|
| | | | limestone | | quartz porphyry | |
| | | | 0 hr | 24 hr | 0 hr | 24 hr |
| Comparative | no additive | - | 25 | 25 | 50 | 50 |
| | (beef tallow alkyl)propylenediamine | 0.3 | 0 | 20 | 0 | 30 |
| | monooleate of ethylene oxide (3 mol) adduct of (beef tallow alkyl)-propylenediamine | 0.3 | 0 | 10 | 0 | 20 |
| | 1-aminoethyl-2-heptadecenyl-imidazoline-2 | 0.3 | 0 | 10 | 0 | 15 |
| Present invention | mixture of mono- and dipalmityl phosphate | 0.3 | 0 | 5 or below | 0 | 5 or below |
| | mixture of mono- and distearyl phosphate | 0.3 | 0 | 5 or below | 0 | 5 or below |
| | mixed (mono- and di-)ester of Guerbet alcohol ($C_{30}$) phosphates | 0.3 | 0 | 5 or below | 0 | 5 or below |
| | mixed (mono- and di-)ester of polyoxyethylene (3 mol) lauryl phosphates | 0.5 | 0 | 5 or below | 0 | 5 or below |

It is evident from Table 1 that the compounds of the present invention have high adherability to all types of aggregates ranging from the acidic stone to the basic stone and are excellent additives which do not deteriorate excellent performance even under severe heating conditions.

Example 2

Each of various additives given in Table 2 was mixed with straight asphalt (penetration of 60 to 80) to prepare an asphalt sample. River sand from Kinokawa was used as macadam and the aforementioned Riedel and Weber Test was conducted to evaluate the adhesion. The results are shown in Table 2.

Table 2

| | Additive | Quantity of addition (%) | Adhesion score |
|---|---|---|---|
| Comparative | no additive | 0 | 1 |
| | (beef tallow alkyl)propylene-tetramine | 2.0 | 3 |
| | ethylene oxide (3 mol) adduct of (beef tallow alkyl)propylenediamine | 2.0 | 2 ~ 3 |
| | 1-aminoethyl-2-heptadecenyl-imidazoline-2 | 2.0 | 2 ~ 3 |
| | long-chain alkylpolyamideamine | 2.0 | 2 ~ 3 |
| | oleic acid | 2.0 | 1 |
| | calcium stearate | 2.0 | 2 ~ 3 |
| | activated carbon | 10.0 | 1 |
| | slaked lime: 10 wt.% sand was replaced with 10 wt.% slaked lime | | 5 |
| Present invention | monostearyl phosphate | 1.0 | 10 |
| | distearyl phosphate | 1.0 | 10 |
| | mixture of monooleyl phosphate and dioleyl phosphate | 1.0 | 10 |

| | | | |
|---|---|---|---|
| | dipalmityl phosphate | 1.0 | 10 |
| | mixture of monopalmityl phosphate and dipalmityl phosphate | 1.0 | 10 |
| Present invention | monocapryl phosphate | 1.5 | 8 |
| | phosphate of $C_{12}$ and $C_{13}$ oxo alcohols | 1.0 | 8 |
| | phosphate of Guerbet alcohol ($C_{32}$) | 1.0 | 10 |
| | phosphate of sorbitan laurate | 1.5 | 8 |
| | phosphate of polyoxyethylene (5 mol) nonylphenyl ether | 1.5 | 8 |
| | phosphate of ethylene oxide adduct of laurylamine | 1.5 | 8 |
| | phosphate of polyoxypropylene (8 mol) butylphenyl ether | 1.5 | 8 |
| | dicaprylphosphinic acid | 1.5 | 8 |
| | dodecylphenylphosphonic acid | 1.5 | 8 |

It is evident from Table 2 that conventional additives have little effect in the test, among which slaked lime has a good effect with an adhesion score of 5 and it is effective in practical test pavement. Accordingly, the test results are considered to be an effective method of evaluating peeling phenomenon, and the bitumen compositions containing the additives of the present invention have high adhesion and can prevent the peeling.

Example 3

In a similar manner to that described in Example 2 the Riedel and Weber Test was conducted except that 90 % by weight of asphalt (penetration of 60 to 80) was mixed with each of modifiers given in Table 3 and each of additives given in Table 3 was added thereto to prepare a modified asphalt. The results of the Riedel and Weber Test are shown in Table 3.

Table 3

| Modifier | Additive | Quantity of addition (%) | Adhesion score |
|---|---|---|---|
| ethylene/vinyl acetate copolymer (vinyl acetate content: 15 wt.%) (melt index: 15) | no additive | 0 | 4 |
| | (beef tallow alkyl)propylenediamine | 1.0 | 4 |
| | phosphate of $C_{14}$ and $C_{15}$ oxo alcohols | 0.5 | 10 |
| | monooleyl phosphate | 0.5 | 10 |
| | distearyl phosphate | 0.5 | 10 |
| | phosphate of Guerbet alcohol ($C_{28}$) | 0.5 | 10 |
| | phosphate of polyoxyethylene (3mol) lauryl alcohol | 0.5 | 8 |
| ethylene/ethyl acrylate copolymer (vinyl acetate content: 10 wt.%) (melt index: 15) | no additive | 0 | 4 |
| | (beef tallow alkyl)propylenediamine | 1.0 | 4 |
| | lauryl phosphate | 0.5 | 10 |
| | oleyl phosphate | 0.5 | 10 |
| | behenyl phosphate | 0.5 | 10 |

| | | | |
|---|---|---|---|
| styrene/butadiene rubber latex | no additive | 0 | 4 |
| | (beef tallow alkyl)propylenediamine | 1.0 | 4 |
| | oleyl phosphate | 0.5 | 9 |
| | isooleyl phosphate | 0.5 | 9 |
| | stearyl phosphate | 0.5 | 9 |

It is evident from the results of Table 3 that the acidic organophosphorus compound of the present invention exhibits high adhesion as compared with conventional (beef tallow alkyl)propylenediamine.

WHAT WE CLAIM IS:

1. A method for strengthening the adhesion between heated bitumen and aggregates by adding to the bitumen an acidic organophosphorus compound having a P-OH group and a group of the formula (I):

$$A\text{-}(RO)_n\text{-} \quad (I)$$

in which A is an organic group having 8 to 80 carbon atoms, R is an alkylene group having 1 to 10 carbon atoms and n is zero or an integer of 1 to 10.

2. A method as claimed in Claim 1, in which the compound is added to the bitumen in an amount of 0.1 to 5.0 percent by weight.

3. A method as claimed in Claim 1, in which the compound has the formula (II):

$$[BO(C_2H_4O)_n]_m\overset{O}{\overset{\|}{P}}-(OH)_k \quad (II)$$

in which B is a saturated or unsaturated aliphatic hydrocarbon group having 8 to 36 carbon atoms or an alkylphenyl group having 8 to 26 carbon atoms, m is 1 or 2, n is zero or an integer of 1 to 10 and k is 1 or 2, the total of m and k being 3.

4. A method as claimed in Claim 1, in which the alkylene group is ethylene.

5. A method as claimed in Claim 1, in which the bitumen is a modified bitumen.

6. A bitumen composition which comprises heated bitumen and an additive of an acidic organophosphorus compound as defined in Claim 1.

7. An additive for heated bitumen characterized by being composed of an acidic organophosphorus compound having a P-OH group and a group or groups of the following formula (I) in the molecule:

$$A \leftarrow RO \rightarrow_n \qquad \ldots (I)$$

wherein A is an organic group having 8 to 80 carbon atoms, R is an alkylene group having 1 to 10 carbon atoms and n is an integer of 0 to 10.

8. An additive as set forth in claim 7, wherein the alkylene group is ethylene.

9. An additive as set forth in claim 7, wherein the acidic organophosphorus compound is a compound of the formula (II):

$$\left[BO(C_2H_4O)_n\right]_m \overset{O}{\overset{\|}{P}} - (OH)_k \qquad \ldots (II)$$

where B is a saturated or unsaturated aliphatic hydrocarbon group having 8 to 36 carbon atoms or an alkylphenyl group having 8 to 26 carbon atoms, m is an integer of 1 or 2, n is an integer of 0 to 10, k is an integer of 1 or 2 and m+k is 3.

European Patent Office

# EUROPEAN SEARCH REPORT

0157210

Application number

EP 85 10 2540

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 693 425 (HARLEY F.HARDMAN)<br>* Claims 5,8; column 3, lines 60-63 *<br>--- | 1-3,6, 7,9 | C 08 L 95/00<br>C 08 K 5/51 |
| X | FR-A-1 332 060 (ESSO RESEARCH)<br>* Page 4, abstract points 1,2,9 *<br>----- | 1,2,4, 6-8 | |
| | | | **TECHNICAL FIELDS SEARCHED (Int. Cl.4)** |
| | | | C 08 L |

The present search report has been drawn up for all claims

| Place of search | Date of completion of the search | Examiner |
|---|---|---|
| THE HAGUE | 20-06-1985 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82